Europäisches Patentamt

European Patent Office

Office européen des brevets

(19)

(11) Veröffentlichungsnummer: **0 041 653**
**B1**

(12) **EUROPÄISCHE PATENTSCHRIFT**

(45) Veröffentlichungstag der Patentschrift :
24.08.83

(21) Anmeldenummer : 81104081.5

(22) Anmeldetag : 27.05.81

(51) Int. Cl.³ : **F 28 F 1/14**, F 24 J 3/02,
F 25 B 39/02, F 24 D 3/00,
F 24 D 13/02, B 21 D 39/03

(54) **Wärmeaustauschelement.**

(30) Priorität : 06.06.80 DE 3021461

(43) Veröffentlichungstag der Anmeldung :
16.12.81 Patentblatt 81/50

(45) Bekanntmachung des Hinweises auf die Patenterteilung : 24.08.83 Patentblatt 83/34

(84) Benannte Vertragsstaaten :
AT CH DE FR GB IT LI SE

(56) Entgegenhaltungen :
EP A 0 004 580
EP A 0 009 553
CH A 617 999
DE A 3 004 311
FR A 2 302 174
NL C 95 575

(73) Patentinhaber : ELPAG AG CHUR
Quaderstrasse 11
CH-7001 Chur (CH)

(72) Erfinder : Bleckmann, Ingo, Dipl.-Ing. Dr. mont.
Ignaz-Rieder-Kai 11
A-5020 Salzburg (AT)

(74) Vertreter : Liedl, Gerhard et al
Patentanwälte Liedl, Nöth Steinsdorfstrasse 21 - 22
D-8000 München 22 (DE)

EP 0 041 653 B1

Jouve, 18, rue St-Denis, 75001 Paris, France

## Wärmeaustauschelement

Die Erfindung betrifft ein Wärmeaustauschelement entsprechend dem Oberbegriff des Anspruches 1.

Wärmeaustauschelemente gemäß der Erfindung sind geeignet für Einrichtungen zur Raumbeheizung, z. B. für Fußboden- oder Deckenheizungen, für Einrichtungen zur Wärmegewinnung, die mittels einer Wärmepumpe oder eines Verdampfers betrieben werden, für Durchlauferhitzer und für Verdampfereinrichtungen von Kühlaggregaten. Besonders eignen sich die Wärmeaustauscheinrichtungen auch für sogenannte Energiedächer oder Energiefassaden.

Es sind z. B. aus der CH-A-617 999 und der NL-C-95 575 Wärmeaustauscheinrichtungen bekannt, bei denen in Tragbleche Nuten eingeformt werden, in welche die das Warmwasser führenden Rohre eingelegt werden. Der Wärmeübergang von dem Außenmantel des Rohres auf die Innenwand der Nut des Tragbleches ist ziemlich schlecht, da nur eine linienförmige oder punktförmige Anlage dieser beiden Flächen miteinander erreicht werden kann. Dies ist darauf zurückzuführen, daß bereits geringe Abweichungen zwischen der Rohrachse und der « Nutachse » oder Durchmesserabweichungen dazu führen, daß sich das Rohr nur an wenigen Punkten an der Innenwand der Nut abstützt. Die direkte Wärmeleitung Metall zu Metall bleibt auf diese Punkte beschränkt. Die dazwischenliegenden Luftbrücken lassen nur eine Wärmeleitung durch Konvektion und Strahlung zu. Bei Fußbodenheizungen spielt dieser Umstand keine allzu große Rolle, da der Wärmeabfluß durch den Fußbosen sowieso gebremst ist, so daß man davon ausgehen kann, daß trotz des geschilderten Umstandes das Tragblech annährend die Temperatur des Rohraußenmantels erreicht. Bei Anwendungsgebieten, bei denen eine relativ große Heizleistung, z. B. von einem Rohrheizkörper auf das Tragblech, zu übertragen ist oder bei dem z. B. im Wärmepumpenbetrieb eine große Wärmeenergie aus dem Tragblech entnommen werden soll, ist ein guter Wärmeübergang unbedingt erforderlich. Bei Heizkörpern für die Raumbeheizung sind in verschiedenen Ländern Höchsttemperaturen zugelassen, die insbesondere wegen der Gefährdung von Kindern nicht überschritten werden dürfen. Dies führt dazu, daß bei gegebener Heizleistung und vorgegebener Oberflächentemperatur des Rohrheizkörpers wesentlich größere Aggregate verwendet werden müssen, als diese an sich bei einem ungestörten Wärmefluß Metall zu Metall in flächiger Berührung des Rohrheizkörpers mit dem Tragblech erforderlich wären. Im Wärmepumpenbetrieb, wenn beispielsweise große Wärmemengen aus einem Energiedach entnommen werden, steigt infolge der nur punkt- oder linienförmigen Berührung der das Wärmeaustauschmedium führenden Rohre mit der Innenwand der Nut des Tragbleches die Temperaturdifferenz zwischen dem in dem Rohr fließenden Wärmeaustauschmedium und dem Tragblech bis auf z. B. 10 °C an. Dadurch ergibt sich eine größere Pumpleistung der Wärmepumpe und ein höherer Energieverbrauch, es sei denn, die Gesamtfläche des Wärmeaustauschelementes wird erheblich vergrößert, z. B. verdoppelt, wodurch jedoch wesentlich höhere Investitionskosten entstehen.

Es sind weiterhin aus der DE-A-27 09 301 Wärmeaustauschvorrichtungen zum Einfangen von Strahlungsenergie bekannt, bei denen in eine Rille eines Metallblattes Rohre eingelegt sind, die durch geeignete Mittel, vorzugsweise durch Schweißen, längs der Kontakt-Mantellinie einstückig miteinander verbunden sind (siehe Seite 10, vorletzter Absatz). Abgesehen von der nur linienförmigen Anlage und dem erheblichen, mit den Schweißarbeiten verbundenen Arbeitsaufwand führen Schweißstellen zu Korrosionsproblemen, da die unterschiedlichen Metalle und Legierungen unter Einwirkung der in Großstädten oder in der Nähe bestimmter Industriebetriebe schwefelsäurehaltigen Luftfeuchtigkeit Potentialunterschiede, verbunden mit einem Stromfluß, bilden. Außerdem eignen sich die hinsichtlich ihrer guten Wärmeleitfähigkeit und Haltbarkeit für den in Rede stehenden Zweck besonders geeigneten Aluminiumlegierungen nur schlecht für eine Verschweißung.

Aus der EP-A-0 009 553 ist bekannt, an einem Rohr eine Schar von parallel zueinander verlaufenden Drähten oder ein Gitter zu befestigen, und zur Herstellung von Solarheizungen oder Wärmeaustauschvorrichtungen die Drähte oder das Gitter in ein Tragblech einzupressen. Der Wärmeübergang erfolgt jedoch dabei nur über die linienförmige Anlage des Rohres an dem Tragblech und über die Drähte, so daß die oben beschriebenen Nachteile auftreten.

Aus der EP-A-0 004 580 ist bekannt, ein mit einer Drahtwendel versehenes Rohr oder ansonsten ein Rohr mit einer wellenförmigen Manteloberfläche in ein Tragblech einzupressen. Auch hier erfolgt der Wärmeübergang nur über die linienförmige Anlage und über die eingepreßten Drahtwendelkuppen.

Aus der FR-A-2 302 174 ist bekannt, Rohrheizkörper an einem Tragblech unter Zwischenlage einer Einlage zu befestigen, die Löcher mit ausgefransten Rändern, sog. « Durchzügen » besitzt. Selbst wenn der Rohrheizkörper in eine Dreiecksform umgepreßt wird, dann liegt nur etwa 1/3 der Manteloberfläche an dem Tragblech an unter entsprechender Verminderung des Wärmeübergangs.

Aus der DE-A-3 004 311 ist eine Wärmetauscherplatte bekannt, bei der ein Rohr auf eine Platte gelegt wird und über dasselbe umgreifende Spangen, Drahtgitter oder Blechlamellen, die mit ihren Enden bzw. Rändern in die Platte eingepreßt sind, auf der Platte gehalten wird. Auch hier erfolgt der Wärmeübergang nur über die linien- oder streifenförmige Anlagestelle des Rohres an der Platte und über die genannten Halteglieder.

Der Erfindung liegt dementsprechend die Aufgabe zugrunde, ein Wärmeaustauschelement der in Rede stehenden Art vorzuschlagen, bei dem durch großflächiges sattes Anliegen der Nutinnenwand an fast der gesamten Außenmantelfläche des Rohres ein wesentlich besserer Wärmeübergang durch direkte Wärmeleitung erzielt wird.

Die Lösung der gestellten Aufgabe ergibt sich aus den kennzeichnenden Merkmalen des Hauptanspruchs ; die Unteransprüche 2 bis 9 beschrieben bevorzugte Ausführungsformen.

Die vorgeschlagene Lösung beruht also auf der Erkenntnis, daß im Gegensatz zu bisherigen Lösungsvorschlägen die Innenwand der Nut unter starker Spannung um den Mantel des Rohres oder Rohrheizkörpers herumgezogen werden muß, und daß dieser Spannungszustand durch ein den Nutspalt überbrückendes Verbindungselement fixiert werden muß. Die Erzeugung der Spannung gelingt durch kontinuierlich oder diskontinuierlich arbeitende Werkzeuge, welche gleichzeitig von beiden Seiten je in den Knick zwischen dem Randbereich und dem Beginn der Nut eingreifen. Dieser Zustand wird dann durch das streifenförmige Verbindungselement fixiert, welches sich in den Randbereichen der Nut verankert. Das Verbindungselement kann dabei eine bestimmte innere Elastizität haben. Dadurch wird ein einheitlicher gleichmäßiger Anpreßdruck über die gesamte Länge der Nut bzw. des Rohres gewährleistet. Es wird auch sichergestellt, daß unter Berücksichtigung der auftretenden Wärmespannungen der Anpreßdruck nicht so hoch ansteigt, daß das Verbindungselement aus seiner Verankerung herausgebrochen wird.

Die beiliegenden Zeichnungen dienen im Zusammenhang mit der folgenden Beschreibung der weiteren Erläuterung der Erfindung.

Es zeigen :

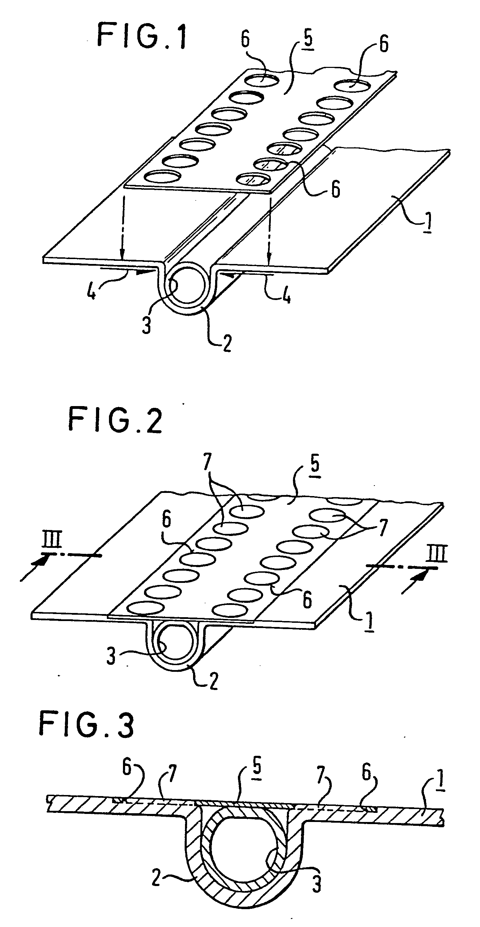

Figur 1 eine schaubildliche Draufsicht auf die Anordnung vor dem Aufpressen eines Blechstreifens ;

Figur 2 die Anordnung nach dem Aufpressen des Blechstreifens ;

Figur 3 in vergrößertem Maßstab einen Schnitt längs der Linie III-III in Fig. 2 ;

Figur 4 einen Schnitt eines Tragbleches mit U-förmiger Nut und eingelegtem Rohrheizkörper ;

Figur 5 einen Schnitt ähnlich Fig. 1 nach Umformung der U-förmigen Nut in eine Omeganut.

Figur 6 eine schaubildliche abgebrochene Draufsicht auf das fertiggestellte Wärmeaustauschelement ;

Figur 7 einen Schnitt längs der Linie VII-VII. in Fig. 6 ;

Figur 8 ein Wärmeaustauschelement mit einem Rohr, welches ein flüssiges oder gasförmiges Wärmeaustauschmedium führt ;

Figuren 9 bis 11 Draufsichten auf weitere Ausführungsformen von streifenförmigen Verbindungselementen ;

Figur 12 eine Draufsicht auf eine Ausführungsform mit einem plattenförmigen Heizelement und

Figur 13 eine Schnittansicht einer abgewandelten Ausführungsform.

In einem Tragblech 1 ist in einer Rinne oder Nut 2 ein Rohr 3 angeordnet. Mittels eines in Richtung der Pfeile 4 wirkenden, nicht dargestellten Preßwerkzeugs wird die Innenwand der Nut 2 an den Außenmantel des Rohres 3 angedrückt. Ein Blechstreifen 5 besitzt zwei Reihen von Löchern 6. Der Abstand der Reihen voneinander ist dabei etwas größer als der Nutspalt bzw. der Durchmesser des Rohres 3. Der Blechstreifen 5 wird nun auf das Tragblech 1 so aufgepreßt, daß der Nutspalt überbrückt und geschlossen wird, d. h. die beiden Reihen der Löcher 6 kommen auf die einander gegenüberliegenden, sich an die Nut 2 anschließenden Randbereiche des Tragbleches 1 zu liegen. Das Material des Tragbleches 1 dringt bei dem Preßvorgang in die Löcher 6 ein und bildet dort nietkopfartige Verankerungen 7.

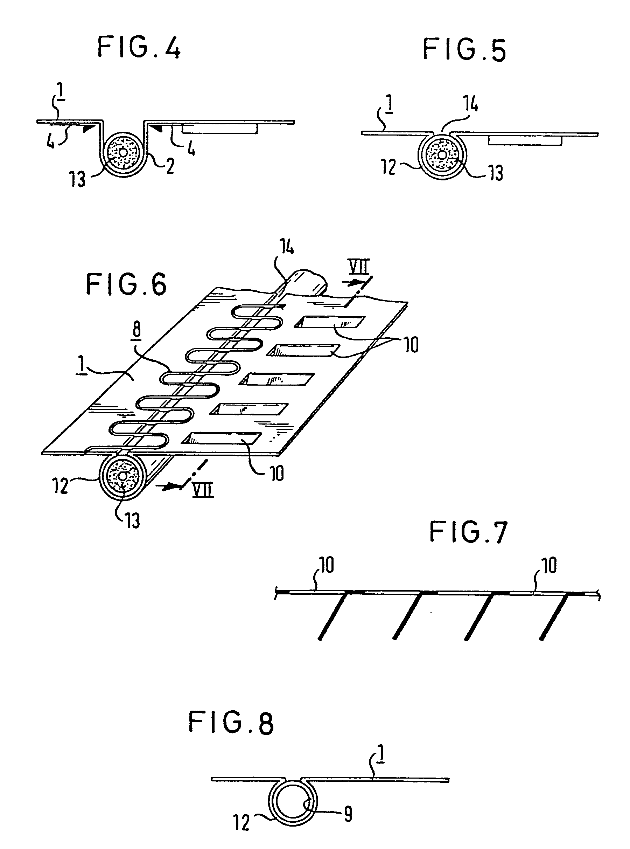

Unter Bezugnahme auf Fig. 4 wird in das Tragblech 1 eine U-förmige Nut 2 eingeformt, deren Tiefe größer ist als der Durchmesser eines in dieselbe eingelegten Rohrheizkörpers 13. Nun wird durch zangenartig in Richtung der Pfeile 4 wirkende Werkzeuge die Vertiefung oder Nut 2 in eine Nut 12 in Form des griechischen Buchstabens Omega umgeformt, wobei die Innenwand der Omeganut 12 unter starkem Anpreßdruck in satter Anlage an die Außenwand des Rohrheizkörpers 13 angedrückt wird.

Die durch die Pfeile 4 angedeuteten Werkzeuge können diskontinuierlich oder kontinuierlich arbeiten. Im ersteren Falle wird die Anordnung aus dem Tragblech 1 und dem Rohrheizkörper 13 jeweils um die Breite eines zangenartig schließenden Preßwerkzeuges in Richtung der Achse des Rohrheizkörpers 13 vorgerückt. Im zweiten Falle durchläuft das Tragblech 1 eine Walzenstraße mit mehreren Walzenpaaren, welche um Achsen in der Flächennormalen des Tragbleches 1 rotieren. Der Abstand der Walzen der Walzenpaare wird im Sinne des Durchlaufes des Tragbleches 1 immer kleiner, so daß dementsprechend der Nutspalt 14 der Omeganut 12 immer kleiner wird und der Anpreßdruck der Innenwand der Omeganut 12 auf den Außenmantel des Rohrheizkörpers 13 entsprechend erhöht wird.

Unter der Einwirkung des Anpreßdruckes, also wenn der Nutspalt 14 seine geringste Breite erreicht hat, wird entsprechend der Darstellung in Fig. 6 ein mäanderförmig oder zickzackförmig gebogener Drahtstreifen 8 in die Oberfläche des Tragbleches 1 eingepreßt. Bei diesem Preßvorgang wird der Drahtstreifen 8 im wesentlichen vollständig von dem Material des Tragbleches 1 umflossen, so daß eine dauerhafte Verankerung entsteht, bei der der gewünschte Anpreßdruck der Innenwand der Omeganut 12 auf die Außenwand des Rohrheizkörpers 13 erhalten bleibt.

Im weiteren Durchlauf können seitlich von einem oder auch von beiden Randbereichen U-förmige Einschnitte 10 in das Tragblech 1 unter entsprechender Ausbiegung von Lappen eingestanzt werden. Die bei Beheizung durch den Rohrheizkörper 13 sich ergebende Wärmeabgabe an die Luft durch eine Konvektionsströmung wird dadurch entsprechend verbessert.

Entsprechend der Darstellung in Figur 8 können anstelle von Rohrheizkörpern 13 auch Rohre 9 in den omega-förmigen Nuten 12 angeordnet werden.

Die Rohre 3 oder 9 können ein gasförmiges oder flüssiges Wärmeaustauschmedium führen. Mehrere Tragbleche 1 können beispielsweise zu einer Blechdachoberfläche miteinander verbunden werden. Die Rohre 3 oder 9 der verschiedenen Tragbleche 1 werden miteinander verbunden und bilden den Primärkreislauf für eine Wärmepumpe. Aus der Dachfläche kann dann die für die Beheizung eines Wohnhauses benötigte Wärmeenergie entzogen werden.

Es können auch in ein Tragblech 1 mehrere Nuten 2, 12 eingeformt werden. Dabei kann eine der Nuten einen Rohrheizkörper 13 und die benachbarte ein Rohr 9 aufnehmen. Auf diese Weise können z. B. Raumerhitzungsgeräte zur Beheizung oder Frostsicherung in Toiletten und Bädern hergestellt werden, die gleichzeitig zur Warmwasserbereitung geeignet sind. Derartige Konstruktionen eignen sich jedoch auch für andere Geräte, bei denen einerseits ein Durchflußmedium wie Wasser erhitzt werden soll und bei dem andererseits Wärme an ein auf das Tragblech 1 abgestelltes Gefäß abgegeben werden soll, z. B. für Geräte zur Bereitung von Aufgußgetränken, z. B. Kaffee.

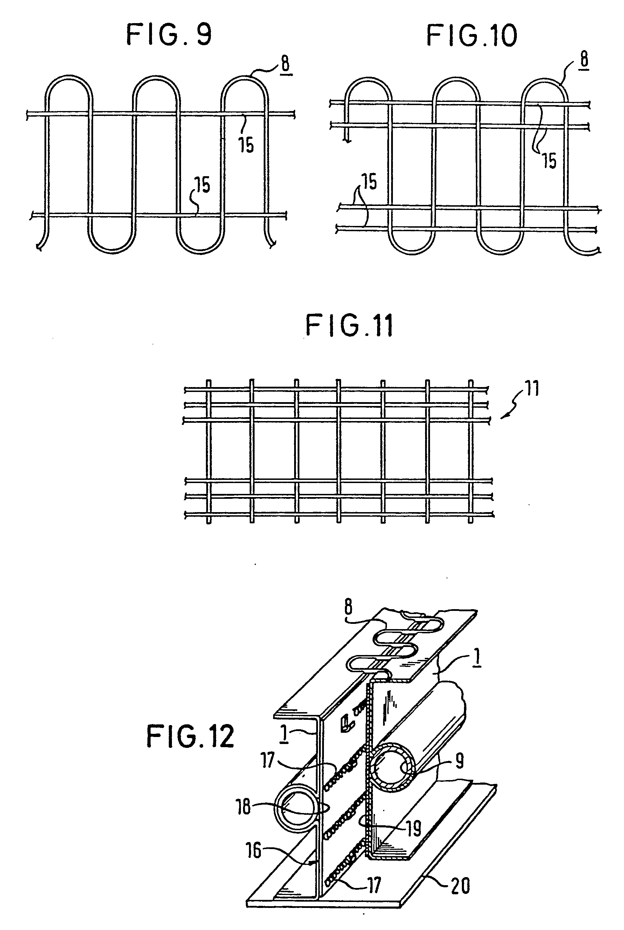

Das den Nutspalt 14 überbrückende und sich in den Randbereichen der omegaförmigen Nut 12 verankernde, streifenförmige Verbindungselement soll aus einem härteren Material bestehen als das Material des Tragbleches 1. Je nach der Stärke des Tragbleches 1 und der gewünschten Verankerung können in den mäanderförmig gebogenen Drahtstreifen 8 weitere Drähte 15 eingefügt werden, wodurch sich auch die Herstellung des streifenförmigen Verbindungselementes erleichtert, oder es können, wie dies in Figur 11 dargestellt ist, auch Gitterstrukturen 11 verwendet werden, die auch durch Zerschneiden eines handelsüblichen größeren Gitters erzielt werden können.

Unter Bezugnahme auf Figur 12 ist ersichtlich, daß anstelle der Rohrheizkörper 13 auch plattenförmige Heizkörper 16 geeignet sind. Diese bestehen z. B. aus einem Heidzdraht 17 oder einer Heizwendel, die auf einer Platte 18 aus Isoliermaterial angeordnet und von einer weiteren Platte 19 aus Isoliermaterial abgedeckt sind. Es können jedoch auch Heizkörper verwendet werden, die aus Platten eines elektrischen Widerstandsmaterials mit positivem Temperaturgradienten bestehen.

Die die Rohre 9 enthaltenden Tragbleche 1 sind im Abstand voneinander angeordnet und liegen an dem plattenförmigen Heizkörper 16 an. Die Ränder der Tragbleche 1 sind Abgewinkelt, so daß sich Randbereiche ergeben, die mit einem mäanderförming gebogenen Drahtstreifen 8 miteinander verbunden sind, wobei vor der Verbindung die Tragbleche 1 an den Heizkörper 16 angepreßt wurden und der Anpreßdruck durch den Drahtstreifen 8 fixiert wird.

Die im Sinne der Darstellung der Fig. 12 unteren Randbereiche können auch durch Auflöten auf einen Träger 20 oder je nach Konstruktion durch einstückige Herstellung, z. B. als Strangpreßteil, vor Einsetzen des Heizkörpers 16 bereits miteinander verbunden sein.

Die Elemente können beliebig lang sein, so daß eine beliebige Anzahl von Heizkörpern 16 untergebracht und damit eine beliebig große Heizleistung erzielt werden kann.

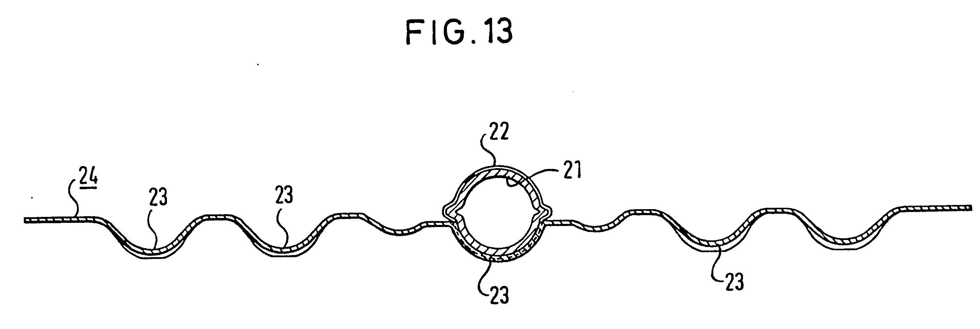

Bei der in Figur 13 dargestellten Ausführungsform wird ein Rohr 21, welches eine Drahtwendel 22 trägt, in eine Rinne 23 eines gewellten Tragbleches 24 eingepreßt, wobei die an dem Boden oder der Innenwand der Rinne 23 anliegenden Abschnitte der Drahtwendel 22 in dieselbe eingedrückt werden, während die übrigen — d. h. außenliegenden — Abschnitte der Drahtwendel 22 ähnlich wie der Drahtstreifen 8 bei der Ausführungsform nach Figur 6 den beim Pressen erzielten Anlagedruck zwischen dem Rohr 21 und der Rinne 23 des Tragbleches 24 fixieren. Die Herstellung der Rinne 23 und das Aufpressen des Rohres 21 mit seiner Drahtwendel 22 kann dabei auch in einem einzigen Arbeitsgang erfolgen.

**Ansprüche**

1. Wärmeaustauschelement, bestehend aus einem Tragblech (1, 24) mit mindestens einer Nut (2, 12, 23), in welcher ein elektrischer Rohrheizkörper (13) oder ein ein Wärmeaustauschmedium führendes Rohr (3, 9, 21) untergebracht ist, dadurch gekennzeichnet, daß die Innenwand der Nut (2, 12, 23) unter starker Spannung an die Außenwand des Rohrheizkörpers (13) oder des Rohres (3, 9, 21) angepreßt ist und daß den Nutspalt (14) überbrückende und mit den Randbereichen des Nutspaltes (14) verbundene Verbindungselemente (5, 8, 11, 22) diesen Spannungszustand fixieren.

2. Wärmeaustauschelement nach Anspruch 1, dadurch gekennzeichnet, daß das Verbindungselement (5, 8, 11, 22) in die Randbereiche des Nutspaltes (14) eingepreßt ist, so daß es von dem Material des Tragbleches (1, 24) umflossen und in diesem verankert ist.

3. Wärmeaustauschelement nach Anspruch 2, dadurch gekennzeichnet, daß das Verbindungselement aus einem Blechstreifen (5) besteht, der mindestens zwei Reihen von Löchern (6) besitzt, in die das Material des Tragbleches (1) beim Aufpressen eingeflossen und in denselben verankert ist.

4. Wärmeaustauschelement nach Anspruch 2, dadurch gekennzeichnet, daß das streifenförmige Verbindungselement aus einem zickzackförmig oder mäanderförmig gebogenen Draht (8) besteht.

5. Wärmeaustauschelement nach einem der Ansprüche 1 bis 4, dadurch gekennzeichnet, daß zusätzlich oder anstelle der Verankerung das Verbindungselement (5, 8, 11, 22) mit dem Tragblech (1, 24) verschweißt oder verlötet ist.

6. Wärmeaustauschelement nach Ansprüchen 1, 2 oder 5, dadurch gekennzeichnet, daß das streifenförmige Verbindungselement eine Gitterstruktur (11) besitzt.

7. Wärmeaustauschelement nach Ansprüchen 1 bis 6, dadurch gekennzeichnet, daß das Tragblech (1, 24) außerhalb der Randbereiche des Nutspaltes (14) eingeschnitten und lamellenförmig ausgebogen ist.

8. Wärmeaustauschelement nach Anspruch 1, dadurch gekennzeichnet, daß zwei Tragbleche (1) im Abstand voneinander angeordnet sind und an einem plattenförmigen Heizkörper (16) anliegen, wobei mindestens ein sich in den beiden Tragblechen (1, 24) verankerndes, streifenförmiges Verbindungselement (8) den erforderlichen Anpreßdruck der Tragbleche (1, 24) an den Heizkörper (16) liefert.

9. Wärmeaustauschelement nach Ansprüchen 1 bis 8, dadurch gekennzeichnet, daß die Nut (12) bis auf einen schmalen Nutspalt (14) geschlossen ist, also die Form des griechischen Buchstabens Omega hat.

## Claims

1. A heat exchange element consisting of a support sheet (1, 24) with at least one groove (2, 12, 23) accommodating an electric tubular heater (13) or a pipe (3, 9, 21) conducting a heat exchange medium, characterized in that the inner wall of the groove (2, 12, 23) is held pressed against the outer wall of the tubular heater (13) or the pipe (3, 9, 21) and that connecting elements (5, 8, 11, 22) bridging the groove gap (14) and joined to the edge zones of the groove gap (14) maintain this condition of tension.

2. A heat exchange element according to claim 1, characterized in that the connecting element (5, 8, 11, 22) is pressed into the edge zones of the groove gap (14), so that it is circumcirculated by the material of the support sheet (1, 24) and anchored therein.

3. A heat exchange element according to claim 2, characterized in that the connecting element consists of a sheet strip (5) having at least two roots of holes (6), into which the material of the support sheet (1) has flowed during the pressing-on operation and in which it is anchored.

4. A heat exchange element according to claim 1, characterized in that the strip-shaped connecting element consists of a wire (8) bent to zigzag shape or meander shape.

5. A heat exchange element according to any one of claim 1 to 4, characterized in that in addition to or instead of the anchorage, the connecting element (5, 8, 11, 22) is welded or soldered to the support sheet (1, 24).

6. A heat exchange element according to claims 1, 2 or 5, characterized in that the strip-shaped connecting element has a lattice structure (11).

7. A heat exchange element according to claims 1 to 6, characterized in that the support sheet (1, 24) is incised and bent outwards into lamellar shape outside the edge zones of the groove gap (14).

8. A heat exchange element according to claim 1, characterized in that two support sheets (1) are disposed to be spaced from each other and abut against a plate-shaped heater (16), wherein at least one strip-shaped connecting element (8) anchored in the two support plates (1, 24) provides the necessary pressure of the support plates (1, 24) against the heater (16).

9. A heat exchange element according to claims 1 to 8, characterized in that the groove (12) is closed except for a narrow groove gap (14), and thus has the form of the Greek letter omega.

## Revendications

1. Elément d'échange thermique, composé d'un support en tôle (1, 24) comportant au moins une rainure (2, 12, 23), dans laquelle est logé un corps tubulaire de chauffage électrique (13) ou un tube (3, 9, 21) véhiculant un fluide d'échange calorifique, caractérisé en ce que la paroi interne de la rainure (2, 12, 23) est appliquée avec une forte pression de serrage contre la paroi externe du corps tubulaire de chauffage (13) ou du tube (3, 9, 21) et en ce que les éléments (5, 8, 11, 22) recouvrant l'ouverture (14) de la rainure et fixés sur les bords de cette même ouverture (14) maintiennent ce serrage.

2. Elément d'échange thermique selon la revendication 1, caractérisé en ce l'élément de fixation (5, 8, 11, 22) est emmanché dans les bords de l'ouverture (14) de la rainure, de façon à être enfoncé dans le matériau de la tôle support (1, 24) et ancré dans ce dernier.

3. Elément d'échange thermique selon la revendication 2, caractérisé en ce que l'élément de fixation se compose d'une bande de tôle (5) présentant au moins deux rangées d'orifices (6), dans lesquels le matériau de la tôle support (1) pénètre lors du serrage, formant un ancrage.

4. Elément d'échange thermique selon la revendication 2, caractérisé en ce que la bande de jonction se compose d'un fil (8) en zigzag ou en forme de méandres.

5. Elément d'échange thermique selon une quelconque des revendications 1 à 4, caractérisé en ce que l'ancrage peut être remplacé ou complété par un brasage ou un soudage de l'élément de fixation (5, 8, 11, 22) à la tôle support (1, 24).

6. Elément d'échange thermique selon les revendications 1, 2 ou 5, caractérisé en ce que la bande de jonction est constituée par un treillis (11).

7. Elément d'échange thermique selon les revendications 1 à 6, caractérisé en ce que la tôle support (1, 24) est découpée à l'extérieur des bords de l'ouverture (14) de la rainure et repliée en forme de chicane.

8. Elément d'échange thermique selon la revendication 1, caractérisé en ce que deux supports en tôle (1) espacés l'un de l'autre reposent sur un élément chauffant (16) en forme de plaque, une bande de jonction (8) au moins, ancrée dans les deux tôles (1, 24), assurant la pression de serrage requise entre les supports en tôle (1, 24) et l'élément chauffant (16).

9. Elément d'échange thermique selon les revendications 1 à 8, caractérisé en ce que la rainure (12) est fermée, exception faite d'une étroite ouverture (14), et présente donc la forme de la lettre grecque oméga.

FIG.1

FIG.2

FIG.3

FIG.4

FIG.5

FIG.6

FIG.7

FIG.8

## FIG. 9

## FIG.10

## FIG.11

## FIG.12

FIG.13